# EUROPEAN PATENT APPLICATION

(11) **EP 2 386 804 A2**
(43) Date of publication of application: **16.11.2011**
(21) Application number: 11003904.7
(22) Date of filing: 12.05.2011
(51) Int. Cl.: F24F 5/00, F24F 13/078

(54) **Integrated ventilating and heating cowls and systems including them**

(30) Priority: 13.05.2010 GB 1007973
(71) Applicant: Morehead, John, Rochestown Cork (IE)
(72) Inventor: Morehead, John, Rochestown Cork (IE)
(74) Representative: Horton, Andrew Robert Grant

(57) **Abstract**

A ventilating system for a building comprises a first sub-system (4) of ducts for the supply of air by way of a first plurality of supply cowls (7) to interior parts of the building, a second sub-system (5) of ducts for the exhaust of air by way of a second plurality of exhaust cowls (8) from the interior parts of the building, and a heat exchanger (9) in which heat in air in the second sub-system is transferred to air in the first sub-system. At least some of the exhaust cowls (8) each define a respective passageway (19) for air out of a respective interior space and include a respective heater (20) for directing radiant heat towards the said respective interior space.

## Description

### Field of the invention

This invention relates to ventilating cowls, particularly for mechanical heat recovery systems employed in 'passive houses' and other low energy buildings.

### Background to the invention

A certified 'passive house' meets certain comfort and energy use criteria and is at the cutting edge of low energy design at present. Simplistically, a passive house can maintain levels of thermal air quality comfort without any conventional heating system. This is largely due to informed design decisions with respect to orientation, citing, shelter etc, supported by the use of highly efficient thermal envelopes that minimise heat losses, extremely good building detailing permitting high standards of air-tightness, the use of waste heat from general appliances and that generated by occupants, the intelligent design of window orientation and specification to achieve a positive energy balance (where gains exceed losses) and the use of highly efficient Mechanical Heat Recovery Ventilation systems (MHVR).

A 'passive house' must have an annual heat demand less than 15 kW(m²). The general heating load is <= 10W/m².

The specific heat capacity of air limits the ability of an air system to heat a building. The volume of air within the system, limitations on velocity, and the maximum temperature to which incoming air can be heated (52°C) before dust bums, all contribute to discomfort perception, thereby limiting the capacity of a MHVR system with conventional in-line heat exchangers to heat these buildings, and additional supplemental heating systems are required.

There are principally three common directions in which one can design a heating system for a passive house or low energy project.
a) insulated air heating system with ventilation heat recovery
b) conventional heating system with ventilation heat recovery
c) conventional heating system with demand-controlled mechanical extract ventilation (DC MEV).

One problem is that available conventional heating systems are generally oversized and are not responsive enough for the small loads demanded in a passive house. A 250m² passive house may have €10k worth of boiler and under floor heating system, which tends to be oversized and in need of very accurate control mechanisms to maintain equilibrium.

Another problem in regions with relatively high rates of precipitation is that on entering a passive house the 20°C ambient temperature will be evident but there may be no fire or radiator to address individual occupant comfort requirements. Effectively the entire treated floor area will equalise to 20°C. Individual temperatures in individual rooms can be controlled somewhat with air velocities, but a quick localised heat up is not generally available without upsetting the equilibrium in the whole building. Furthermore, 20°C is not generally considered a comfortable temperature for sleeping, whereas 18°C would be.

So the design and installation of the MHVR system is critical. In general, the living spaces are fed with supply air, and wet rooms such as bathrooms with extraction take the supply air from the living spaces, through transfer grills and exhaust it via the heat exchanger. Every space is generally provided with a supply, transfer grill or extract cowl. Bathrooms have generally supplemental heat from towel rails which assist in achieving suitable comfort levels of 24°C. The air is then exhausted via filters and through the heat exchanger to open air, heat being recovered at a rate of up to 92%. The volume and capacity of the air system are based on the number of occupants and the overall volume of the building based on a notional ceiling height of 2.5m. In general 30m³/h of fresh air is recommended per person to maintain air quality levels.

There are already available ceramic heating components which use infrared heating of a certain wavelength to provide background heat in specialist areas. They may be used for maintaining reptiles at comfortable temperatures, for heating externally ventilated smoking areas and on a larger scale, localised areas in high volume factory spaces. The tuning of the infrared wavelength based on the manufacturing components and geometries to suit the human temperature receptors has generated efficiencies in the energy use of these units. The heaters can also for instance be tuned to excite water particles in the air to heat air without drying the air. The elements heat through radiation rather than convection.

The ceramic emitter emits IR radiation which can, owing to its wavelength, be readily absorbed by humans.

### Summary of the invention

In one aspect the invention provides a ventilating cowl comprising an outer element and an inner element defining an annular passageway tapering from a mouth to a throat, and within the inner element an emitter disposed to provide radiant heat in a direction outwardly from the mouth.

In another aspect the invention provides a ventilating system for a building, comprising a first sub-system of ducts for the supply of air by way of a first plurality of supply cowls to interior parts of the building, a second sub-system of ducts for the exhaust of air by way of a second plurality of exhaust cowls from the interior parts of the building, and a heat exchanger in which heat in air in the second sub-system is transferred to air in the first sub-system, air temperature being boosted if required with a conventional heater battery in which at least some of the exhaust cowls each define a respective annular passageway for air out of a respective interior space and include a respective heater for directing radiant heat towards the said respective interior space.

The present invention is based on the concept of combining the mechanical heat recovery ventilation systems and providing localised comfort by radiation. A ventilating cowl would integrate the heater within its design and the shape of the face and surface material characteristics of the heater element would ensure that the radiation was appropriately focused to suit the location whilst also assisting with the Coanda effect aiding air dispersion, In particular the extract air would pass the rear of the heater element and be extracted, with any latent heat being recycled through the heat exchanger in the mechanical heat recovery system. The concern about burning dust smells is mitigated by the fact that the ceramic heater Is located on the exhaust circuit of the system and that the rear of the heater is insulated. Any waste heat from the heater can be recycled to add to the efficiency and the radiant heat at the cowl. Comfort criteria perceived by the occupant due to the radiant heat may permit higher than normal air extraction levels when required, which may assist with the removal of humidity and reduction of condensation within the system. Furthermore the use of these radiant emitters can enable the reduction of ambient air temperatures within the building whilst maintaining comfort thereby considerably reducing energy loads.

It should be stressed that it is radiant heat and not convection that makes the system efficient and contributes positively to the perception of comfort. The emitters can be activated using motion detectors or timers and outputs of 150-300w should be adequate for most bathroom situations and the heat-up time of these units is relatively quick. They can be shut down when not in use and background heat from towel heaters can contribute to comfort levels if required by convection and heating the ambient air prior to extraction.

In general living spaces, the heaters can be located strategically at their recommended height to suit individual requirements and used in a conventional manner. One would anticipate that the units would be located on walls/ceilings in kitchen/dining areas to suit individual comfort requirements and to give that 'instant' stimulant of heat when required without adversely upsetting the overall equilibrium or temperature balance of the building. It is possible that they can be integrated into the supply cowls and independent of the MHVR system. When turned off, the ceramic surface rapidly cools and ceases to emit heat / radiation, permitting the passive house local area to return to its equilibrium rapidly, In general a passive house dwelling would have 4/5 extract units and perhaps 5/6 supply units balancing the system with supply, the extract units providing higher air changes pulling the air through transfer grilles with make up being provided in the supply system.

The reliance on an inline heater battery to rapidly heat an air based heating system requires extensive control measures and dampers and a heavily insulated ducting system with its associated complexity, expense and bulk and is limited by the specific heat capacity of the air, velocities and distribution losses etc. In all but smaller buildings, it can be difficult to provide air supplied heat through the inline heater battery alone. It is also difficult to isolate thermal areas within most dwellings, particularly in open plan situations. The provision of localised heat to meet occupants individual and sometimes short time requirements through this invention enables other parts of the dwelling to be easily retained at a lower ambient , reducing the overall energy load and preventing overheating in areas that do not require or desire a rise in temperature.

One example of the invention will be described with reference to the accompanying drawings, in which
Figure 1 is a plan view of a single storey building including a heating system and heaters accordingly to the invention.
Figure 2 is a vertical view of a heater *in situ.*
Figure 3 is a schematic drawing of a heat exchanger.
Figure 4 is a schematic drawing of one embodiment of a radiant heater according to the invention in the horizontal orientation.
Figure 5 is a schematic drawing of the radiant heater according to the invention in the vertical orientation.
Figure 6 is a schematic drawing of another embodiment of a radiant heater according to the invention.

### Detailed Description

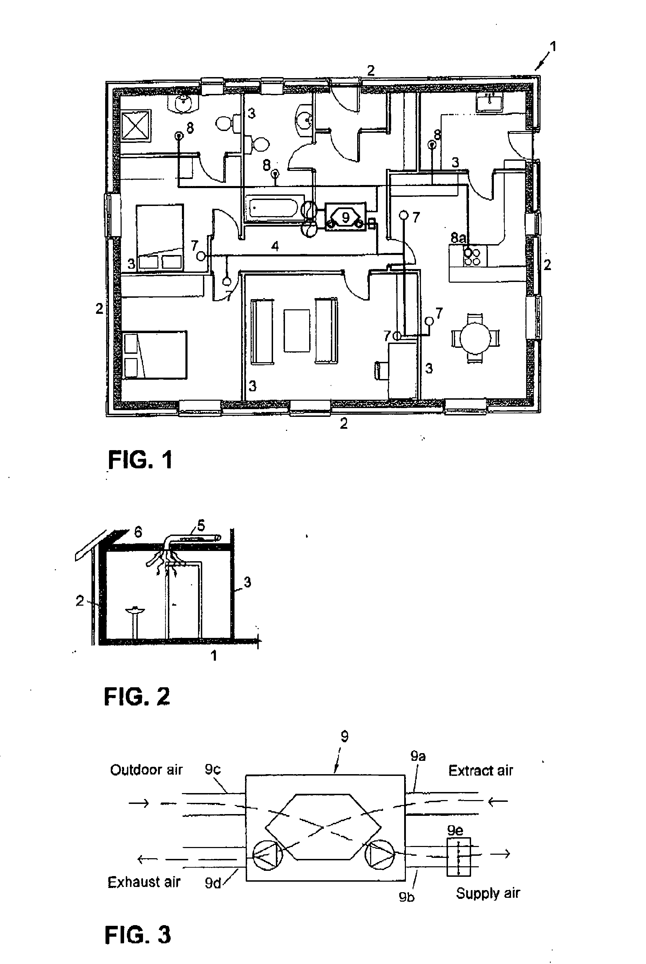

In Figure 1 is shown in plan a 'passive house' which in this example is a single storey building 1 having an outer wall 2 and interior walls 3 such as walls partitioning an interior space into a multiplicity of rooms and individual spaces. Two sub-systems 4, 5 of ducts for air are provided, in this example mainly in an insulated attic or roof space 6 (Figure 2). The sub-system 4 of ducts connects various supply cowls 7, by means of which fresh air is supplied to the respective space or room. The second sub-system 5 connects a plurality of exhaust cowls 8.

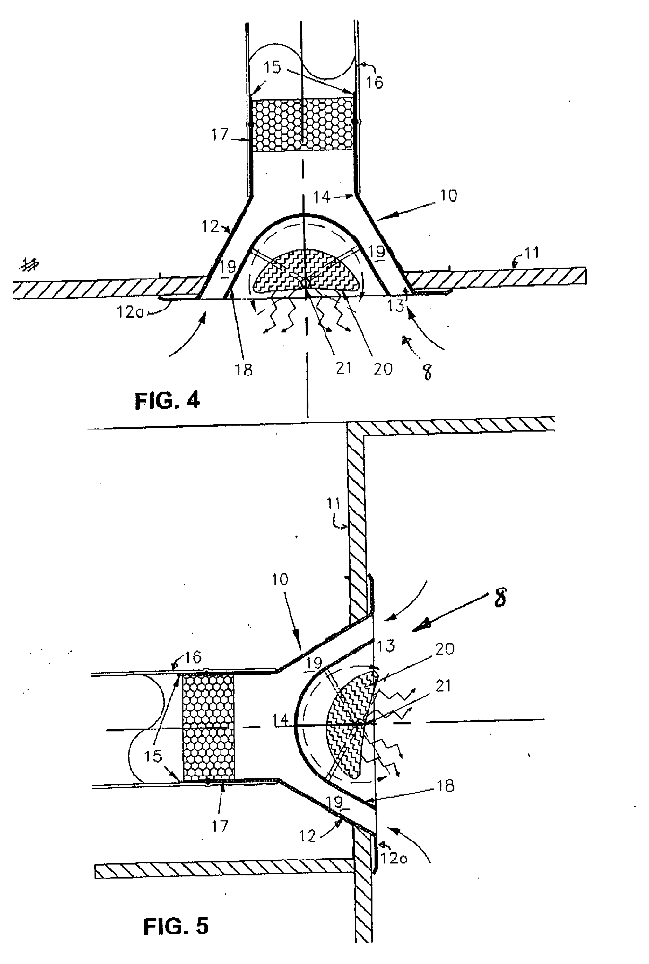

The exhaust cowls 8 each include a radiant heater and will be discussed with reference to Figure 4, The system 5 may also include at least one exhaust cowl 8a which (unlike the cowls 8) is not integrated with a radiant heater.

Fresh air is taken in from the exterior through a port 9c of a heat-exchanger 9 (Figure 3) and is supplied to the sub-system 4 and thence the supply cowls 7 by way of port 9b of the heat-exchanger 9 which may have supplementary heat induced by means of a heater battery 9e . The exhaust air from the cowls 8 is ducted to the port 9a and leaves the heat-exchanger 9 by way of port 9d.

The heat-exchanger, as shown in Figure 3, comprises a body within which there is heat exchange between air from the exhaust system 5 and fresh outdoor air entering the heat exchanger via inlet 9c and entering the supply system 4 by way of a port 14.

The entire air supply and exhaust system may be adjusted to negative pressure. The air's veiocity through the system may be, for example, of the order of 1 m/sec.

In Figure 4 is shown one example of an integrated emitter and exhaust cowl 8 according to the invention. In Figure 5 the cowl 8 is shown upright with the emitter element rotated to the horizontal, adjustable to suit the requirements, particularly suitable where ducting is run in a bulkhead in multiple storey situations, but it is preferable though not essential to dispose it horizontally in a ceiling aperture, as shown in Figure 2 in a single storey dwelling with relatively low ceiling heights.

The cowl 8 is supported in an aperture 10 in a structural element 11 (such as a ceiling or wall board). The cowl comprises an outer element 12, in this example a frusto-cone, which narrows from a mouth 13 to a throat 14. The outer element has a rim 12a for fixture to the board 11.

At its throat 14 the element 12 has a cylindrical extension 15 which fits within and is secured to the duct 16 forming part of the system 5. The extension 15 may include filters 17.

In the space defined by the outer element 17 is supported (by struts not shown) an inner element 18 which in this example is a hollow frusto-cone which thus defines with the outer element 17 a tapering annular passage 19. The element 12 and 18 may be reflective and may be made of aluminium,

With the interior space defined by the inner element 18 is disposed a radiant ceramic emitter 20 which may be in a form known per se, mounted on a pivot fixed to the inner element 18. This arrangement gives limited directional control of the heater element. This heater has a surface 21 which faces away from the mouth of the cowl 8. Thus the heater 20 provides infrared radiant energy into the room or interior living space from which air is extracted by the ventilating system through the surrounding exhaust passage 19.

It is, however, feasible to integrate the heater in similar manner with a supply cowl 7 configured and employed to supply air by way of the passage 19. In such an example the filters 17 would be omitted.

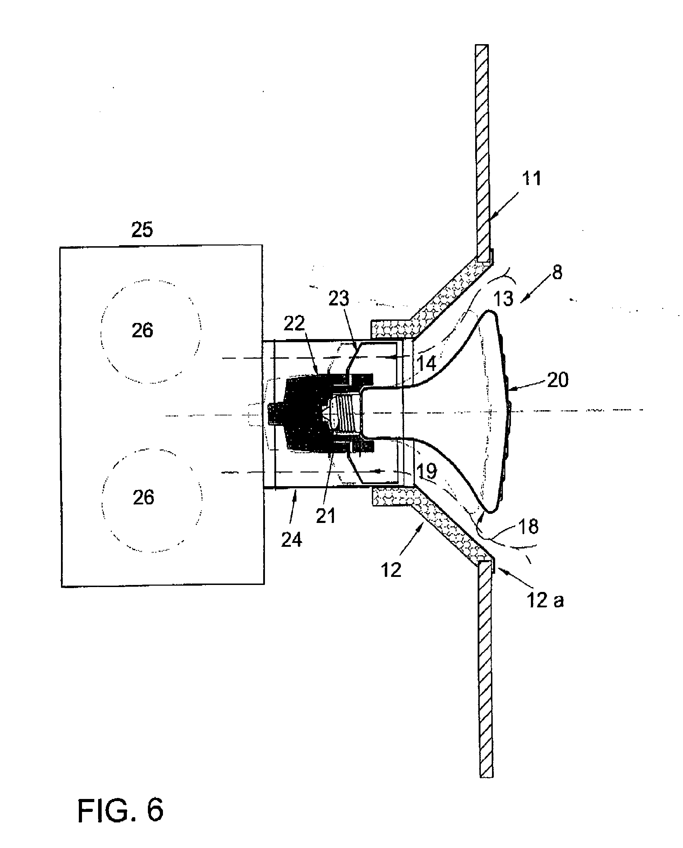

Figure 6 illustrates another embodiment of an integrated emitter and exhaust cowl 8 according to the invention. The cowl 8 is, like the embodiment shown in Figure 5, supported in an aperture 10 in a structural element 11. The cowl includes an outer frusto-conical element 12 which has an outer mouth 13 and an inner throat 14. The outer rim 12a of the element 12 engages the structural element 12.

An annular passage 19 is formed between the outer element 12 and an inner element constituted by the outer skin of a radiant (infra-red) ceramic bulb emitter 20. The passage allows the passage of exhaust air as previously described.

The emitter 20 has a screw-threaded base 21 which engages a holder 22. The holder is positioned by means of a spring bracket 23 which fits within a tube 24 extending from the throat 14 to a valve casing 25. The tube allows the passage of air from the passage 19 into the casing 25. Within the casing is a spigot or spigots 26 connected to conduits (not shown). The embodiment in Figure 6 may be part of a system as previously described with reference to Figure 1-3.

A cowl as described may be adapted to fit directly into a standard ceiling grid with and without air ducting as a localised heating system, possibly with lighting integrated.

## Claims

1. A ventilating cowl comprising an outer element (12) and an inner element (18) defining an annular passageway (19) tapering from a mouth (13) to a throat (14), and within the inner element an emitter (20) disposed to provide radiant energy in a direction outwardly from the mouth.

2. A ventilating cowl according to claim 1 in which the emitter (20) comprises a ceramic element emitting infrared radiation.

3. A ventilating cowl according to claim 1 or claim 2 in which the outer and inner elements (12, 18) are reflective.

4. A ventilating cowl according to claim 1, 2 or 3, in which the cowl is an exhaust cowl.

5. A ventilating cowl according to any foregoing claim, in which the emitter is pivotally mounted for adjustment of the said direction.

6. A ventilating system for a building, comprising a first sub-system (4) of ducts for the supply of air by way of a first plurality of supply cowls (7) to interior parts of the building, a second sub-system (5) of ducts for the exhaust of air by way of a second plurality of exhaust cowls (8) from the interior parts of the building, and a heat exchanger (9) in which heat in air in the second sub-system is transferred to air in the first sub-system, in which at least some of the exhaust cowls (8) each define a respective passageway (19) for air out of a respective interior space and include a respective heater (20) for directing radiant energy towards the said respective interior space.

7. A ventilating system according to claim 6 in which an exhaust cowl (8) comprises an outer element (12) and an inner element (18) defining an annular passageway (19) tapering from a mouth (13) to a throat (14), and within the inner element an emitter (20) disposed to emit radiant energy in a direction outwardly from the mouth.

8. A ventilating system according to claim 7, in which the heater is pivotally mounted for adjustment of the said direction.
